# FASCICULE DE BREVET EUROPEEN

(11) **EP 0 508 857 B1**
(45) Date de publication et mention de la délivrance du brevet: **25.06.1997**
(21) Numéro de dépôt: 92400864.2
(22) Date de dépôt: 27.03.1992
(51) Int. Cl.: C08L 27/04, C08K 13/02

(54) **Compositions de polymère halogéné stabilisées à l'aide d'un additif minéral**
Mit Hilfe eines mineralischen Additivs stabilisierte halogenhaltige polymere Zusammensetzungen
Halogenated polymeric compositions stabilized by means of a mineral additive

(30) Priorité: 09.04.1991 FR 9104546
(43) Date de publication de la demande: 14.10.1992
(73) Titulaire: RHONE-POULENC CHIMIE, 92408 Courbevoie Cédex (FR)
(72) Inventeur: Arfiche, Mireille, F-77400 Lagny (FR); Carette, Louis, F-92130 Issy Les Moulineaux (FR); Pena Porta, Pierre, F-13320 Bouc Bel Air (FR); Pouenat, François, F-75016 Paris (FR)
(74) Mandataire: Ricalens, François

(56) Documents cités:
- EP-A- 0 246 867
- GB-A- 2 075 989
- GB-A- 2 213 154
- RESEARCH DISCLOSURE. 310103 vol. 1990, no. 310, Février 1990, HAVANT GB page 155; CIBA -GEIGY AG: 'stabilized chlorine-containing polymer composition'

## Description

La présente invention concerne de nouvelles compositions stabilisées à base de polymère halogéné et plus spécifiquement de polymère chloré.

Les polymères chlorés, et notamment le polychlorure de vinyle (PVC), ont tendance à se déshydrochlorer lors de leur mise en forme à chaud, pour libérer de l'acide chlorhydrique ; cela conduit à la formation de doubles liaisons polyéniques responsables de la coloration desdits polymères.

De nombreux additifs ont été préconisés, d'une part pour limiter la formation d'acide chlorhydrique ou pour le fixer, d'autre part pour ralentir la propagation des doubles liaisons polyéniques.

On peut se référer par exemple à l'ouvrage "La stabilisation des chlorures de polyvinyle" de F. CHEVASSUS (1957-éditions AMPHORA).

Parmi les stabilisants de base des polymères chlorés, des composés organiques du zinc et du cadmium, associés à des composés organiques du calcium, du baryum ou du magnésium notamment, sont largement utilisés.

Cependant, il est le plus souvent nécessaire de leur associer d'autres stabilisants, parfois appelés stabilisants secondaires.

Ainsi le brevet FR-A-2 297 227 décrit des compositions de PVC stabilisées de manière efficace par des sels organiques métalliques tels que notamment des sels de zinc, de calcium et de baryum et une β-dicétone.

Le brevet FR-A-2 483 934 a préconisé d'utiliser une hydrotalcite avec un composé du zinc, mais les résultats étaient mauvais en ce qui concerne la couleur du PVC.

Le brevet EP-A-63 180 a proposé d'utiliser des sels organiques métalliques, une β-dicétone ou un énolate métallique de β-dicétone et une hydrotalcite. La présence d'hydrotalcite dans ces compositions stabilisantes n'apporte pas d'avantage significatif en ce qui concerne le jaunissement lors de la mise en forme à chaud du polymère.

Or il est nécessaire, notamment pour les applications dans lesquelles une transparence et un aspect incolore ou faiblement coloré de l'objet conformé sont recherchées, d'avoir la durée la plus longue possible d'absence de coloration ou d'évolution lente de coloration, lors du conformage à chaud du polymère chloré. C'est ce que l'on appelle parfois la plage de travail disponible.

La présente invention fournit une solution à ce problème d'allongement de la plage de travail.

Elle concerne plus précisément des compositions stabilisées à base de polymère chloré, caractérisées en ce qu'elles contiennent :
a) 0,005 à 1 % en poids d'un composé organique du zinc ou du cadmium,
b) 0,005 à 5 % en poids d'un composé organique du calcium, du magnésium, du baryum ou de lanthanides,
c) 0,005 à 5 % en poids d'au moins un carbonate basique amorphe d'aluminium et de magnésium, représenté globalement par la formule (I) :

   (MgO)_{y}, Al₂O₃, (CO₂)ₓ, (H₂O)_{z} (I)

   dans laquelle :
   - y représente en moles un nombre entier ou fractionnaire tel que 0 < y ≦ 1,7
   - x représente en moles un nombre entier ou fractionnaire tel que 0 < x ≦ 0,7
   - z représente un nombre entier ou fractionnaire supérieur ou égal à 3;
et dans laquelle au plus ¼ de l'aluminium est sous forme non amorphe.

Les carbonates basiques essentiellement amorphes d'aluminium et de magnésium sont des composés non-cristallins, contrairement aux hydrotalcites de l'art antérieur, dont l'analyse de la structure unidimensionnelle est généralement interprétée comme une structure de couches monoatomiques de MgO de type brucite, alternant avec des couches monoatomiques d'aluminium portant des carbonates.

Selon les analyses par diffraction X, les carbonates basiques d'aluminium et de magnésium de l'invention sont constitués par de l'oxyde de magnésium, de l'hydroxyde de magnésium ou du carbonate de magnésium entouré de carbonate basique et ou d'hydroxyde d'aluminium amorphe. C'est en ce sens que l'on parle de composés amorphes ou essentiellement amorphes dans le présent texte : l'oxyde de magnésium ou l'hydroxyde de magnésium possède une structure cristalline, mais l'ensemble du composé de formule (I) n'a pas une structure cristalline.
Ainsi, dans la formule I, par amorphe il faut comprendre que au plus 1/4, avantageusement 1/10, plus préférentiellement 1/20, de préférence 1/100 de l'aluminium est sous forme non amorphe (i.e. sous la forme cristalline), de préférence l'espèce contenant le magnésium est cristalline.
Selon l'invention, pour éviter que les espèces aluminifères ne deviennent cristallines, il est avantageux d'ajouter des polyols, préférentiellement des polyols présentant 6 atomes de carbone, de préférence des sucres, parmi les sucres les préférés sont ceux de la famille du sorbitol.
La concentration en poids des polyols est dans la fourchette de 0,1 à 20%, de préférence entre 1 et 10 %, en général au moins 0.1/4.
Les carbonates basiques amorphes d'aluminium et de magnésium de formule (I) peuvent être préparés par coprécipitation, dans les proportions requises, d'un carbonate basique d'aluminium (ou hydroxycarbonate d'aluminium) avec un dérivé du magnésium tel qu'un hydroxyde de magnésium ou un carbonate de magnésium.
Bien que cela ne soit pas nécessaire pour leur propriété de stabilisants, on peut ajouter aux coprécipités ainsi obtenus divers composés qui forment une sorte d'enrobage des particules du carbonate basique d'aluminium et de magnésium de formule (I).
Ainsi par exemple, on peut ajouter de l'acide stéarique ou l'un de ses dérivés, notamment des stéarates métalliques, un polyol tel que le sorbitol.
Ces composés permettent d'améliorer la dispersion du carbonate basique d'aluminium et de magnésium dans le polymère chloré ou le cas échéant d'améliorer la stabilité dudit carbonate.
Le séchage du carbonate basique d'aluminium et de magnésium est conduit de manière à atteindre les spécifications souhaitées en matière de taux d'humidité.
Les compositions selon l'invention contiennent de 0,005 % à 5 % en poids de carbonate basique amorphe d'aluminium et de magnésium de formule (I) par rapport au poids de polymère chloré, et de préférence de 0,01 % à 2 % en poids.
Les polymères chlorés sont notamment le polychlorure de vinyle (PVC), le polychlorure de vinylidène ; les copolymères comportant majoritairement des motifs chlorure de vinyle obtenus à partir de chlorure de vinyle et d'autres monomères; les mélanges de polymères ou copolymères dont une partie majoritaire est obtenue à partir de chlorure de vinyle.

De manière générale tout type de PVC convient, quel que soit son mode de préparation : polymérisation en masse, en suspension, en émulsion ou de tout autre type et quelle que soit sa viscosité intrinsèque.

Les homopolymères du chlorure de vinyle peuvent également être modifiés chimiquement, par exemple par chloration.

De nombreux copolymères du chlorure de vinyle peuvent également être stabilisés contre les effets de la chaleur, c'est-à-dire le jaunissement et la dégradation. Ce sont en particulier les copolymères obtenus par copolymérisation du chlorure de vinyle avec d'autres monomères présentant une liaison éthylénique polymérisable, comme par exemple l'acétate de vinyle ou le chlorure de vinylidène ; les acides maléique ou fumarique ou leurs esters ; les oléfines telles que l'éthylène, le propylène, l'hexène ; les esters acryliques ou méthacryliques ; le styrène ; les éthers vinyliques tels que le vinyldodécyléther.

Habituellement ces copolymères contiennent au moins 50 % en poids de motifs chlorure de vinyle et de préférence au moins 80 % en poids de motifs chlorure de vinyle.

Les compositions selon l'invention peuvent également contenir des mélanges à base de polymère chloré contenant des quantités minoritaires d'autres polymères, comme les polyoléfines halogénées ou les copolymères acrylonitrile-butadiène-styrène.

Le PVC seul ou en mélange avec d'autres polymères est le polymère chloré le plus largement utilisé dans les compositions de l'invention.

Les composés organiques du zinc ou du cadmium sont plus particulièrement les carboxylates et les phénolates de zinc ou de cadmium.

Les plus couramment utilisés sont par exemple les sels de zinc ou de cadmium des acides maléique, acétique, diacétique, propionique, hexanoïque, éthyl-2 hexanoïque, décanoïque, undécanoïque, laurique, myristique, palmitique, stéarique, oléique, ricinoléïque, béhénique (docosanoïque), hydroxystéarique, hydroxyundécanoïque, benzoïque, phénylacétique, paratertiobutylbenzoïque et salicylique ; les phénolates de zinc du phénol et des phénols substitués par un ou plusieurs radicaux alkyle, tels que les nonylphénols.

Pour des raisons pratiques ou pour des raisons économiques, on choisit de préférence parmi les composés organiques du zinc cités précédemment, le propionate de zinc, l'éthyl-2 hexanoate de zinc, le laurate de zinc, le stéarate de zinc, l'oléate de zinc, le ricinoléate de zinc, le docosanoate de zinc, le benzoate de zinc, le paratertiobutylbenzoate de zinc, le salicylate de zinc, le maléate de zinc et de mono(éthyl-2 hexyle), les nonylphénates de zinc et parmi les composés organiques du cadmium cités précédemment, le propionate de cadmium, l'éthyl-2 hexanoate de cadmium, le laurate de cadmium, le stéarate de cadmium, l'oléate de cadmium, le ricinoléate de cadmium, le docosanoate de cadmium, le benzoate de cadmium, le paratertiobutylbenzoate de cadmium, le salicylate de cadmium, le maléate de cadmium et de mono(éthyl-2 hexyle), les nonylphénates de cadmium.

Les composés organiques du zinc ou du cadmium représentent de 0,005 % à 1 % en poids par rapport au polymère chloré, et de préférence de 0,01 % à 0,6 % en poids.

Pour des questions de toxicité, les composés du cadmium bien qu'efficaces sont proscrits dans certaines applications, notamment alimentaires.

De préférence, les compositions de l'invention contiennent donc des composés organiques du zinc.

Les composés organiques du calcium, du magnésium , du baryum et des lanthanides sont de préférence les carboxylates et les phénolates de ces métaux.

Les plus couramment utilisés sont par exemple les sels de calcium, de magnésium, de baryum et de lanthanides des acides maléique, acétique, diacétique, propionique, hexanoïque, éthyl-2 hexanoïque, décanoïque, undécanoïque, laurique, myristique, palmitique, stéarique, oléïque, ricinoléique, béhénique (docosanoïque), hydroxystéarique, hydroxyundécanoïque, benzoïque, phénylacétique, paratertiobutylbenzoïque et salicylique ; les phénolates de calcium, de magnésium, de baryum et de lanthanides du phénol et des phénols substitués par un ou plusieurs radicaux alkyle, tels que les nonylphénols.

Pour des raisons pratiques ou pour des raisons économiques, on choisit de préférence parmi les composés organiques de calcium, de magnésium, de baryum et de lanthanides cités précédemment les sels des acides propionique, éthyl-2 hexanoïque, laurique, stéarique, oléique, ricinoléïque, docosanoïque, benzoïque, paratertiobutylbenzoïque, salicylique, du maléate de mono(éthyl-2 hexyle) ainsi que les nonylphénates de ces métaux.

Les composés organiques du calcium, du magnésium, du baryum et des lanthanides représentent de 0,005 % à 5 % en poids par rapport au poids du polymère chloré et de préférence de 0,02 % à 2 % en poids.

Pour les applications alimentaires et notamment pour les bouteilles en PVC, on utilisera les composés organiques du calcium ou les mélanges composés organiques du calcium/composés organiques du magnésium.

Pour une meilleure stabilisation des compositions à base de polymère chloré, celles-ci comportent de préférence au moins un stabilisant organique secondaire.

Parmi les stabilisants secondaires organiques, les β-dicétones ou β-cétoaldéhydes sont tout particulièrement efficaces.

Ces β-dicétones ont été notamment décrites dans les brevets et certificats d'addition français publiés sous les numéros FR 2 292 227, FR 2 324 681, FR 2 351 149, FR 2 352 025, FR 2 383 988 et FR 2 456 132 et dans les brevets européens EP 0 040 286 et EP 0 046 161.

Comme exemples de telles β-dicétones, on peut citer le benzoylstéaroylméthane, le dibenzoylméthane, la benzoylacétone, la lauroylacétone, la décanoylacétone, le benzoyl méthyl-3 butanoylméthane, les méthoxycarbonylbenzoylbenzoylméthanes, les bis-β-dicétones telles que le bis(acétylacéto)-1,4 butane, le bis(benzoylacéto)-1,8 octane, le bis(acétylacéto)-1,4 benzène.

Les β-dicétones représentent généralement de 0,005 % à 5 % en poids par rapport au poids du polymère chloré et de préférence de 0,01 % à 2 % en poids.

Les dihydro-1,4 pyridines sont aussi des stabilisants organiques qui peuvent être utilisés dans les compositions de l'invention.

Ces composés sont généralement des dihydro-1,4 diméthyl-2,6 dicarboxylate-3,5 pyridines monomères, telles que celles qui sont décrites dans les brevets FR-A-2 239 496, FR-A-2 405 974 et FR-A-2 405 937 ou polymériques, telles que décrites dans le brevet EP-A-286 887.

Habituellement ces dihydro-1,4 pyridines sont efficaces à des teneurs de 0,01 % à 5 % en poids par rapport au poids de polymère chloré et de préférence de 0,05 % à 2 % en poids par poids.

On peut également utiliser conjointement les béta-dicétones ou béta-cétoaldéhydes avec les dihydro-1,4 pyridines. Les quantités globales de ces mélanges de composés sont alors celles indiquées respectivement pour chacun d'entre eux.

Parmi les autres stabilisants organiques qui peuvent être utilisés dans les compositions selon l'invention, on peut citer par exemple :
- les béta-cétoesters et plus particulièrement les esters des acides cétoacétiques, tels que décrits notamment dans les brevets FR-A-1 435 882 et US-A-2 669 548 ;
- le phényl-2 indole et ses dérivés, tels que ceux décrits dans les brevets FR-A-2 273 841, FR-A-2 275 461 et FR-A-2 313 422 ;
- les esters béta-aminocrotoniques, plus particulièrement les béta-aminocrotonates d'alkyle à longue chaîne, c'est-à-dire le plus souvent d'alkyle de C₁₂ à C₂₀ et les béta-aminocrotonates de thioalkylèneglycol ;
- l'urée et ses dérivés tels que la phénylurée ; la thiourée et ses dérivés tels que la diphénylthiourée ;
- les esters d'acides mercaptocarboxyliques et plus particulièrement :
   . les esters de l'acide thioglycolique tels que ceux décrits dans le brevet FR-A-2 459 816,
   . les diesters de l'acide thiomalique tels que ceux décrits dans le brevet EP-A-0 090 748,
   . les esters de l'acide mercapto-2 propionique tels que ceux décrits dans le brevet FR-A-2 552 440.

Les stabilisants organiques indiqués ci-dessus représentent de 0,01 % à 5 % en poids par rapport au poids du polymère chloré et de préférence de 0,05 % à 2 % en poids par poids.

Les compositions de l'invention peuvent comporter d'autres stabilisants thermiques secondaires organiques tels que notamment huiles polyorganosiloxaniques γ-hydroxy-alkylées, les polyols et les phosphites.

Les huiles polyorganosiloxaniques γ-hydroxy-alkylées, à des teneurs efficace, sont plus particulièrement celles qui répondent à la formule générale (II) 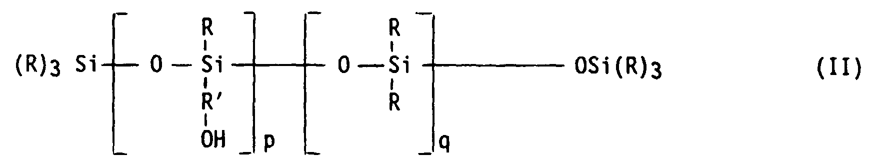 dans laquelle :
- les radicaux R, identiques ou différents, représentent un radical méthyle ou phényle, 60 % en moles au moins de radicaux R étant des radicaux méthyle,
- R' représente un radical alkylène, linéaire ou ramifié, ayant 2 à 6 atomes de carbone,
- p représente un nombre moyen de 1 à 30,
- q représente un nombre moyen de 1 à 100.

De préférence on utilise les huiles de formule (II) dans laquelle :
- R représente un radical méthyle ;
- R' représente un radical triméthylène ou méthyl-2 triméthylène ;
- p représente un nombre moyen de 2 à 20 ;
- q représente un nombre moyen de 2 à 30.

Généralement les huiles polyorganosiloxaniques γ-hydroxyalkylées représentent de 0 % à 5 % en poids par rapport au poids du polymère chloré et de préférence de 0,01 % à 2 % en poids.

La présence d'huiles polyorganosiloxaniques γ-hydroxyalkylées permet de diminuer de manière notable dans les compositions, la quantité de lubrifiants internes tels que l'huile de ricin hydrogénée, de lubrifiants mixtes tels que les cires esters et de lubrifiants externes, tout en améliorant la résistance aux chocs du polymère.

Les polyols ont généralement l'avantage d'allonger la durée de vie des polymères chlorés soumis à un traitement thermique.

Généralement il est préférable que les polyols utilisés aient un point d'ébullition supérieur à 150°C et de préférence supérieur à 170°C, à cause de la mise en oeuvre à température élevée des polymères chlorés.

A titre d'exemples de tels polyols on peut citer des triols comme le triméthylolpropane, le glycérol, l'hexanetriol-1,2,6, le butanetriol-1,2,4, le trishydroxyéthylisocyanurate ; des tétrols comme le pentaérythritol, le diglycérol ; des pentitols comme le xylitol, le tétraméthylolcyclohexanol ; des hexitols comme le mannitol, le sorbitol, le dipentaérythritol ; des polyols partiellement estérifiés par un acide carboxylique et dans la formule desquels au moins 3 fonctions hydroxyle sont libres ; des alcools polyvinyliques, notamment ceux dans lesquels il reste moins de 30 % en moles de groupes esters par rapport à l'ensemble de leurs groupes esters et hydroxyle.

Parmi ces polyols les préférés sont le xylitol, le mannitol, le sorbitol, le triméthylolpropane, le tétraméthylolcyclohexanol et les alcools polyvinyliques définis précédemment.

Lorsqu'il est présent dans les compositions selon l'invention, on utilise en général de 0,005 % à 1 % en poids de polyol par rapport au polymère chloré et de préférence de 0,01 % à 0,6 % en poids.

Les compositions selon l'invention peuvent comporter également des phosphites organiques, notamment des phosphites aliphatiques ou des phosphites aromatiques ou des phosphites mixtes aliphatiques et aromatiques.

Lorsqu'il est présent, le phosphite représente généralement de 0,05 % à 5 % en poids par rapport au polymère chloré et de préférence de 0,1 % à 2 % en poids.

Les compositions selon l'invention peuvent également comporter des adjuvants habituels tels que des antioxydants phénoliques ; des agents anti-UV tels que les benzophénones, les benzotriazoles ou les amines stériquement encombrées (habituellement connues sous le terme de HALS).

Les compositions de l'invention peuvent aussi comporter des époxydes, notamment des polyglycérides époxydés comme l'huile de soja époxydée, l'huile de lin époxydée, les huiles de poissons époxydées ou la talloil époxydée.

Habituellement lorsqu'ils sont présents, les époxydes représentent de 0,05 % à 5 % en poids par rapport au poids du polymère chloré et plus spécifiquement de 0,1 % à 2 % en poids.

Les compositions de l'invention peuvent être des formulations rigides, c'est-à-dire sans plastifiant, ou semi-rigides, c'est-à-dire avec des teneurs en plastifiant réduites, telles que pour les applications dans le bâtiment ou pour la fabrication de bouteilles.

Ces formulations contiennent le plus souvent un renforçateur de chocs, tel qu'un copolymère méthacrylate/butadiène/styrène par exemple.

Elles peuvent également être des formulations plastifiées telles que pour la fabrication de films à usage agricole.

Les plastifiants utilisés sont des composés connus tels que par exemple des phtalates d'alkyle. Le plus souvent utilisé est le phtalate de di(éthyl-2 hexyle) (habituellement appelé phtalate de dioctyle).

Lorsque les compositions contiennent un plastifiant, la teneur de celui-ci est généralement de 5 % à 120 % en poids par rapport au poids de polymère chloré.

De manière habituelle, l'incorporation des différents stabilisants ou adjuvants est faite sur le polymère chloré à l'état de poudre.

On peut bien entendu préparer un mélange de 2 ou plusieurs des composés constitutifs des compositions selon l'invention avant leur incorporation dans le polymère chloré.

Toutes les méthodes usuelles d'incorporation des différents stabilisants ou adjuvants dans le polymère peuvent être utilisées. Par exemple l'homogénéisation de la composition polymérique peut être réalisée sur malaxeur ou mélangeur à rouleaux, à une température telle que la composition devienne fluide, normalement entre 150°C et 200°C pour le PVC et pendant une durée suffisante, de l'ordre de quelques minutes à quelques dizaines de minutes.

Les compositions de polymère chloré, et plus particulièrement de PVC, peuvent être mises en oeuvre selon toutes les techniques utilisées habituellement comme par exemple l'extrusion, l'injection, l'extrusion-soufflage, le calandrage ou le moulage par rotation.

Les exemples qui suivent illustrent l'invention.

### Exemple 1

### Préparation d'un carbonate basique d'aluminium et de magnésium.

Dans un bécher de 5000 cm³, on introduit sous agitation à 200 tours/minute un gel aqueux contenant 608 g d'hydroxyde de magnésium.

On rajoute ensuite en 5 min un gel aqueux contenant 2 915 g d'hydroxycarbonate d'aluminium. On maintient le mélange sous agitation pendant 30 min environ à température ambiante.

On sèche à l'étuve pendant 2 heures à 70°C.

On obtient une poudre blanche de formule générale (I) avec :
- x = 0,37
- y = 0,84
- z = 6,54

La granulométrie moyenne des particules de ce composé est de 3 micromètres.

Un échantillon est examiné par diffraction X. Le spectre de diffraction présente une phase bien cristallisée et relativement intense correspondant à l'hydroxyde de magnésium. On n'observe aucun pic de diffraction correspondant à l'hydroxyde et/ou au carbonate d'aluminium : composés à caractère amorphe.

### Exemple 2

Préparation d'un carbonate basique d'aluminium et de magnésium.

Dans un réacteur de 5 litres muni d'un agitateur, on charge 1080 g d'un gel aqueux de carbonate de magnésium (ayant une concentration exprimée en hydroxyde de magnésium de 6 % en poids par poids).

On agite lentement et on ajoute 2520 d'un gel aqueux d'hydroxyde d'aluminium (ayant une concentration exprimée en Al₂O₃ de 9 % en poids par poids).

On agite à grande vitesse pendant 10 min.

On sèche par atomisation (température de sortie : 100°C).

Le carbonate basique d'aluminium et de magnésium de formule (I) présente les caractéristiques suivantes :
- x = 0,65 (rapport molaire CO₂/Al₂O₃)
- y = 0,47 (rapport molaire MgO/Al₂O₃)
- z = 5,18 (rapport molaire H₂O/Al₂O₃)

Un échantillon est examiné par diffraction X. Le spectre de diffraction présente une phase peu intense correspondant à MgCO₃, 3H₂O. On n'observe aucun pic de diffraction correspondant à l'hydroxyde et/ou au carbonate d'aluminium : composés à caractère amorphe.

### Exemples 3 et 4 et essai comparatif A

On prépare 4 formulations par homogénéisation à température ambiante, dans un mélangeur rapide, des différents constituants suivants :
- PVC préparé par polymérisation en suspension, présentant un K-Wert de 60 : 100 g
- renforçateur de choc (copolymère méthacrylate/butadiène/styrène) : 7 g
- TiO₂ : 4 g
- Ca CO₃ : 4 g
- lubrifiants CIRE E et CIRE OP (cires esters d'alkyle à longue chaîne d'acides gras) : 1 g
- Triméthylolpropane : 0,2 g
- Stéarate de Zn : 0,6 g
- Docosanoate de Ca : 0,5 g
- Dibenzoylméthane : 0,1 g
- Huile de soja époxydée : voir tableau 1
- Hydrotalcite : voir tableau 1 [Mg_{4,5} Al₂(OH)₁₃ CO₃, 3,5 H₂O]
- Carbonate basique d'Al et de Mg de formule (I) préparé dans l'exemple 1 ou l'exemple 2 : voir tableau 1

Le temps nécessaire à une bonne homogénéisation est de 10 minutes environ.

Les mélanges homogènes ainsi obtenus sont introduits dans un plastographe (de marque BRABENDER) constitué par une cuve chauffée, dans laquelle tournent des pales en contre-rotation, afin de malaxer le polymère et les additifs.

La cuve contient 32 g de composition ; la température est maintenue à 180°C et la vitesse de rotation des pales est de 60 tours/min.

Des prélèvements sont effectués après 5 min et 10 min de malaxage dans ces conditions et la coloration des échantillons prélevés est mesurée au moyen d'un colorimètre Minolta et est exprimée en indice de jaune, selon la norme ASTM D 1925 - 70 (plus la valeur de cet indice est élevée, plus l'échantillon est coloré).

Les indices de jaune ainsi mesurés pour chacune des formulations ainsi que les durées en minutes pour lesquelles ces formulations sont devenues noires pendant le traitement à 180°C (stabilité long-terme) sont rassemblés dans le tableau 1 ci-après.

On remarque qu'avec les carbonates basiques d'aluminium et de magnésium, on diminue la vitesse d'évolution de la coloration à chaud (jaunissement), par rapport à l'essai A contenant de l'hydrotalcite ; ce ralentissement du jaunissement est un paramètre très important.

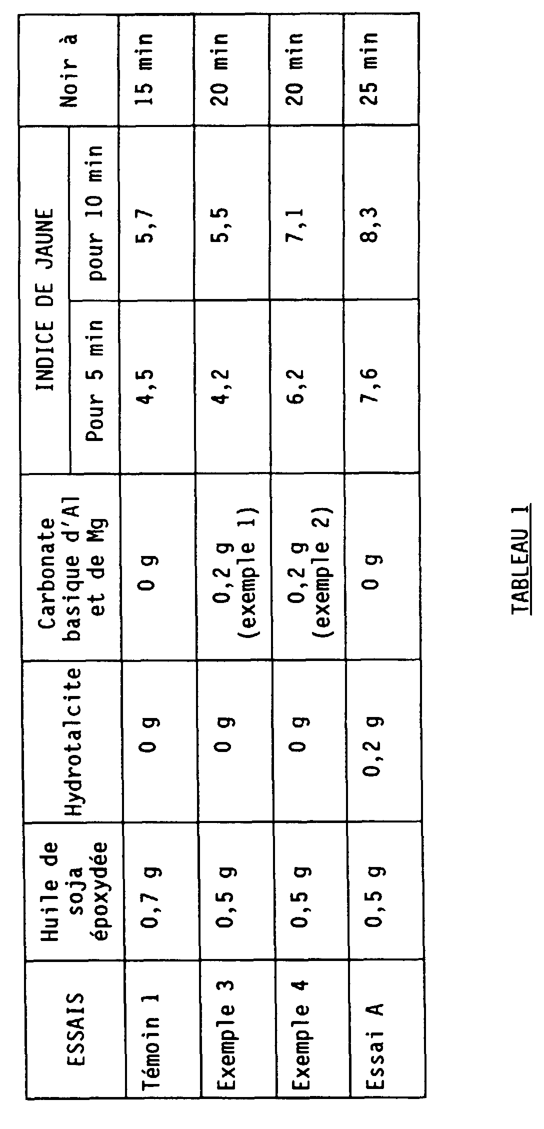

### Exemples 5 à 7

On prépare 4 formulations comportant les constituants suivants et en suivant le mode opératoire décrit dans les exemples 3 et 4 :
- PVC préparé en suspension de K-Wert = 60 : 100 g
- renforçateur de choc : 7 g
- TiO₂ : 4 g
- Ca CO₃ : 4 g
- lubrifiants CIRE E et CIRE OP : 1 g
- Stéarate de calcium : 0,4 g
- Laurate de cadmium/Laurate de baryum (rapport pondéral 2/1) : voir tableau 2
- Huile de soja époxydée : voir tableau 2
- Carbonate basique d'Al et de Mg de formule (I) préparé dans l'exemple 1 : voir tableau 2

On opère comme dans les exemples 3 et 4.

Les indices de jaune mesurés pour chacune des formulations ainsi que les durées du traitement à 180°C nécessaires pour que les formulations deviennent noires sont rassemblés dans le tableau 2 ci-après.

Les exemples avec un carbonate basique d'Al et de Mg de formule (I) présentent une évolution de la coloration à chaud moins rapide que pour le témoin, tout en ayant une durée de stabilité long-terme égale ou supérieure.

Ces résultats sont obtenus tout en diminuant la quantité de stabilisant Cd/Ba ou d'huile de soja époxydée.

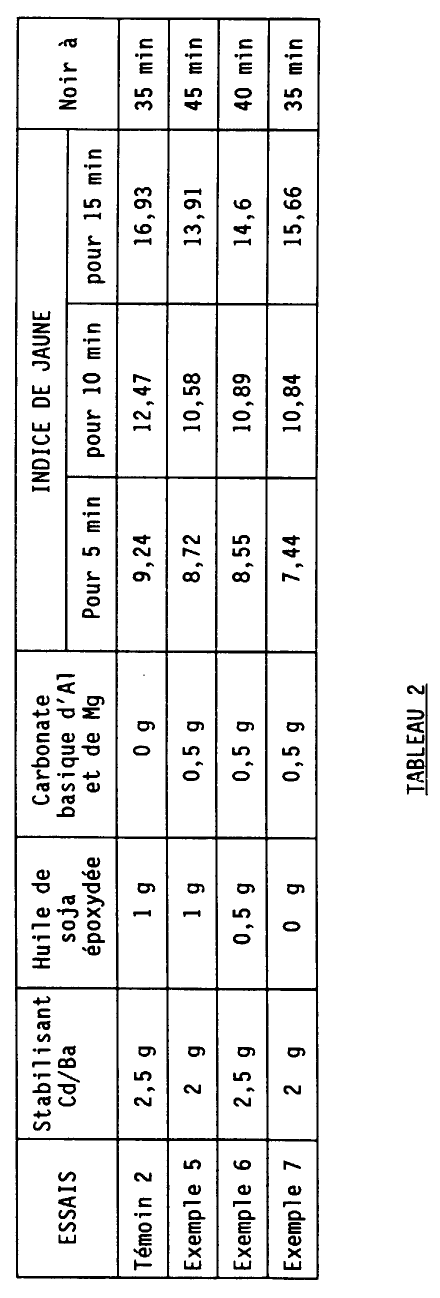

### Exemples 8 et 9 et essai comparatif B

On prépare 4 formulations comportant les constituants suivants et en suivant le mode opératoire décrit dans les exemples 3 et 4 :
- PVC préparé par polymérisation en suspension présentant un K-Wert = 57 : 100 g
- renforçateur de choc (copolymère méthacrylate/ butadiène/styrène) : 8 g
- agent de mise en oeuvre (processing aid) (polymère acrylique) : 0,4 g
- Huile de ricin hydrogénée : 1,2 g
- lubrifiant CIRE OP : 0,4 g
- Octanoate de Zn : 0,12 g
- Docosanoate de Ca : 0,2 g - Stéarate de Ca : 0,15 g
- Stéaroylbenzoylméthane : 0,2 g
- bis(lauroylcarbonyl)-3,5 diméthyl-2,6 dihydro-1,4 pyridine : 0,05 g
- Huile de soja époxydée : 5,5 g
- Hydrotalcite [Mg_{4,5} Al₂(OH)₁₃ CO₃, 3,5 H₂O] : voir tableau 3
- Carbonate basique d'Al et de Mg de formule (I) préparé dans l'exemple 1 ou l'exemple 2 : voir tableau 3

On opère comme dans les exemples 3 et 4.

Les indices de jaune mesurés pour chacune des formulations ainsi que les durées du traitement à 180°C nécessaires pour que les formulations deviennent noires sont rassemblés dans le tableau 3 ci-après.

Par rapport au témoin 3, la présence de carbonate basique d'Al et de Mg permet d'augmenter la stabilité long-terme, tout en diminuant la vitesse d'évolution de la coloration à chaud (ralentissement du jaunissement).

L'essai comportant une hydrotalcite présente une stabilité long-terme plus élevée que les exemples avec le carbonate basique d'Al et de Mg, mais l'évolution rapide de la coloration à chaud rend cette caractérisitique sans intérêt pratique.

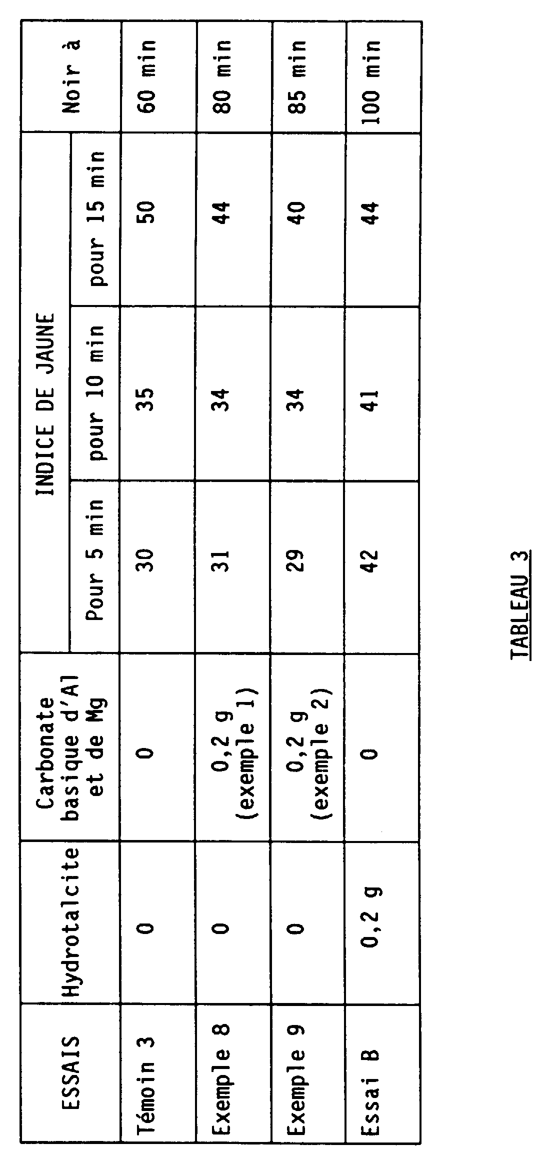

## Revendications (Revendications pour l'(les) Etat(s) contractant(s) suivant(s): AT, BE, CH, LI, DE, DK, FR, GB, GR, IT, LU, NL, PT, SE)

1. Compositions stabilisées à base de polymère chloré, caractérisées en ce qu'elles contiennent:
a) 0,005 à 1 % en poids par rapport au poids de polymère chloré, d'un composé organique du zinc ou du cadmium,
b) 0,005 à 5 % en poids par rapport au poids de polymère chloré, un composé organique du calcium, du magnésium, du baryum ou de lanthanides,
c) 0,005 à 5 % en poids par rapport au poids de polymère chloré, d'au moins un carbonate basique amorphe d'aluminium et de magnésium, représenté globalement par la formule (I):
(MgO)_{y}, Al₂O₃, (CO₂)ₓ, (H₂O)_{z} (I)
dans laquelle :
- y représente en moles un nombre entier ou fractionnaire tel que 0<y≤1,7
- x représente en moles un nombre entier ou fractionnaire tel que 0<y≤0,7
- z représente en moles un nombre entier ou fractionnaire supérieur ou égal à 3,
et dans laquelle au plus 1/4 de l'aluminium est sous forme non amorphe.

2. Compositions selon la revendication 1, caractérisées en ce que le polymère chloré est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

3. Compositions selon l'une des revendications 1 ou 2, caractérisées en ce que le composé organique du zinc ou du cadmium est choisi parmi les carboxylates et les phénolates de zinc ou de cadmium.

4. Compositions selon l'une des revendications 1 à 3, caractérisées en ce que le composé organique du calcium, du magnésium, du baryum et des lanthanides est choisi parmi les carboxylates et les phénolates de ces métaux.

5. Compositions selon l'une des revendications 1 à 4, caractérisées en ce qu'elles contiennent de 0,01% à 2% en poids de carbonate basique amorphe d'aluminium et de magnésium de formule (I) par rapport au poids de polymère chloré

6. Compositions selon l'une des revendications 1 à 5, caractérisées en ce que :
- le composé organique du zinc ou du cadmium représente de 0,01% à 0,6% en poids par rapport au polymère chloré.
- le composé organique du calcium, du magnésium, du baryum et des lanthanides représente de 0,02% à 2% en poids par rapport au poids du polymère chloré.

7. Compositions selon l'une des revendications 1 à 6, caractérisées en ce qu'elles contiennent au moins un stabilisant organique secondaire.

8. Compositions selon l'une des revendications 1 à 7, caractérisées en ce que le stabilisant organique est une β-dicétone, un β-cétoaldéhyde et/ou une dihydro-1,4 diméthyl-2,6 dicarboxylate-3,5 pyridine.

9. Compositions selon la revendication 8, caractérisées en ce que la β-dicétone est choisie parmi le benzoylstéaroylméthane, le dibenzoylméthane, la benzoylacétone, le benzoyl méthyl-3 butanoylméthane, les méthoxycarbonylbenzoylbenzoylméthanes, les bis-β-dicétones telles que le bis(acétylacéto)-1,4 butane, le bis(benzoylacéto)-1,8 octane, le bis(acétylacéto)-1,4 benzène.

10. Compositions selon l'une des revendications 8 ou 9, caractérisées en ce que la β-dicétone ou le β-cétoaldéhyde représente de 0,005 % à 5 % en poids par rapport au poids du polymère chloré et de préférence de 0,01 % à 2 % en poids par poids.

11. Compositions selon la revendication 8, caractérisées en ce que la dihydro-1,4 diméthyl-2,6 dicarboxylate-3,5 pyridine représente de 0,01 % à 5 % en poids par rapport au poids du polymère chloré et de préférence de 0,05 % à 2 % en poids par poids.

12. Compositions selon la revendication 7, caractérisées en ce que le stabilisant organique secondaire est choisi parmi :
- les béta-cétoesters et plus particulièrement les esters des acides cétoacétiques,
- le phényl-2 indole et ses dérivés,
- les esters béta-aminocrotoniques, plus particulièrement les béta-aminocrotonates d'alkyle à longue chaîne de C₁₂ à C₂₀ et les béta-amino-crotonates de thioalkylèneglycol ;
- l'urée et ses dérivés tels que la phénylurée ; la thiourée et ses dérivés tels que la diphénylthiourée ;
- les esters d'acides mercaptocarboxyliques et plus particulièrement :
. les esters de l'acide thioglycolique,
. les diesters de l'acide thiomalique,
. les esters de l'acide mercapto-2 propionique.

13. Compositions selon la revendication 12, caractérisées en ce que les stabilisants organiques représentent de 0,01 % à 5 % en poids par rapport au poids du polymère chloré et de préférence de 0,05 % à 2 % en poids par poids.

14. Compositions selon l'une des revendications 1 à 13, caractérisées en ce qu'elles contiennent une quantité efficace d'une huile polyorganosiloxanique γ-hydroxy-alkylée de formule générale (II) 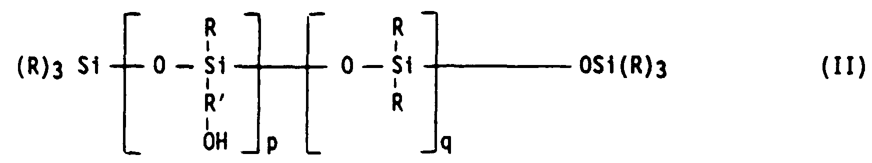 dans laquelle :
- les radicaux R, identiques ou différents, représentent un radical méthyle ou phényle, 60 % en moles au moins de radicaux R étant des radicaux méthyle,
- R' représente un radical alkylène, linéaire ou ramifié, ayant 2 à 6 atomes de carbone,
- p représente un nombre moyen de 1 à 30,
- q représente un nombre moyen de 1 à 100.

15. Compositions selon la revendication 14, caractérisées en ce qu'elles contiennent une huile de formule (II) dans laquelle :
- R représente un radical méthyle ;
- R' représente un radical triméthylène ou méthyl-2 triméthylène ;
- p représente un nombre moyen de 2 à 20 ;
- q représente un nombre moyen de 2 à 30.

16. Compositions selon l'une des revendications 1 à 15, caractérisées en ce qu'elles contiennent de 0 % à 5 % en poids d'huile polyorganosiloxanique γ-hydroxyalkylée par rapport au poids du polymère chloré et de préférence de 0,01 % à 2 % en poids.

## Revendications (Revendications pour l'(les) Etat(s) contractant(s) suivant(s): ES)

1. Procédé de stabilisation de polymère chloré, caractérisé en ce que l'on ajoute audit polymère :
a) 0,005 à 1 % en poids par rapport au poids de polymère chloré, d'un composé organique du zinc ou du cadmium,
b) 0,005 à 5 % en poids par rapport au poids de polymère chloré, un composé organique du calcium, du magnésium, du baryum ou de lanthanides,
c) 0,005 à 5 % en poids par rapport au poids de polymère chloré, d'au moins un carbonate basique amorphe d'aluminium et de magnésium, réprésenté globalement par la formule (I):
(MgO)_{y}, Al₂O₃, (CO₂)ₓ, (H₂O)_{z} (I)
dans laquelle :
- y représente en moles un nombre entier ou fractionnaire tel que 0<y≤1,7
- x représente en moles un nombre entier ou fractionnaire tel que 0<y≤0,7
- z représente en moles un nombre entier ou fractionnaire supérieur ou égal à 3,
et dans laquelle au plus 1/4 de l'aluminium est sous forme non amorphe.

2. Procédé selon la revendication 1, caractérisé en ce que le polymère chloré est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

3. Procédé selon l'une des revendications 1 ou 2, caractérisé en ce que le composé organique du zinc ou du cadmium est choisi parmi les carboxylates et les phénolates de zinc ou de cadmium.

4. Procédé selon l'une des revendications 1 à 3, caractérisées en ce que le composé organique du calcium, du magnésium, du baryum et des lanthanides est choisi parmi les carboxylates et les phénolates de ces métaux.

5. Procédé selon l'une des revendications 1 à 4, caractérisé en ce que l'on ajoute audit polymère de 0,01% à 2% en poids de carbonate basique amorphe d'aluminium et de magnésium de formule (I) par rapport au poids de polymère chloré.

6. Procédé selon l'une des revendications 1 à 5, caractérisé en ce que :
- le composé organique du zinc ou du cadmium représente de 0,01% à 0,6% en poids par rapport au polymère chloré.
- le composé organique du calcium, du magnésium, du baryum et des lanthanides représente de 0,02% à 2% en poids par rapport au poids du polymère chloré.

7. Procédé selon l'une des revendications 1 à 6, caractérisé en ce que l'on ajoute audit polymère au moins un stabilisant organique secondaire.

8. Procédé selon l'une des revendications 1 à 7, caractérisé en ce que le stabilisant organique est une β-dicétone, un β-cétoaldéhyde et/ou une dihydro-1,4 diméthyl-2,6 dicarboxylate-3,5 pyridine.

9. Procédé selon la revendication 8, caractérisé en ce que la β-dicétone est choisie parmi le benzoylstéaroylméthane, le dibenzoylméthane, la benzoylacétone, le benzoyl méthyl-3 butanoylméthane, les méthoxycarbonylbenzoylbenzoylméthanes, les bis-β-dicétones telles que le bis(acétylacéto)-1,4 butane, le bis(benzoylacéto)-1,8 octane, le bis(acétylacéto)-1,4 benzène.

10. Procédé selon l'une des revendications 8 ou 9, caractérisé en ce que la β-dicétone ou le β-cétoaldéhyde représente de 0,005 % à 5 % en poids par rapport au poids du polymère chloré et de préférence de 0,01 % à 2 % en poids par poids.

11. Procédé selon la revendication 8, caractérisé en ce que la dihydro-1,4 diméthyl-2,6 dicarboxylate-3,5 pyridine représente de 0,01 % à 5 % en poids par rapport au poids du polymère chloré et de préférence de 0,05 % à 2 % en poids par poids.

12. Procédé selon la revendication 7, caractérisé en ce que le stabilisant organique secondaire est choisi parmi :
- les béta-cétoesters et plus particulièrement les esters des acides cétoacétiques,
- le phényl-2 indole et ses dérivés,
- les esters béta-aminocrotoniques, plus particulièrement les béta-aminocrotonates d'alkyle à longue chaîne de C₁₂ à C₂₀ et les béta-amino-crotonates de thioalkylèneglycol ;
- l'urée et ses dérivés tels que la phénylurée ; la thiourée et ses dérivés tels que la diphénylthiourée ;
- les esters d'acides mercaptocarboxyliques et plus particulièrement :
. les esters de l'acide thioglycolique,
. les diesters de l'acide thiomalique,
. les esters de l'acide mercapto-2 propionique.

13. Procédé selon la revendication 12, caractérisé en ce que les stabilisants organiques représentent de 0,01 % à 5 % en poids par rapport au poids du polymère chloré et de préférence de 0,05 % à 2 % en poids par poids.

14. Procédé selon l'une des revendications 1 à 13, caractérisé en ce que l'on ajoute audit polymère une quantité efficace d'une huile polyorganosiloxanique γ-hydroxy-alkylée de formule générale (II) 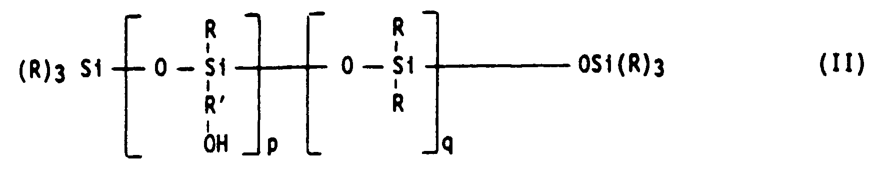 dans laquelle :
- les radicaux R, identiques ou différents, représentent un radical méthyle ou phényle, 60 % en moles au moins de radicaux R étant des radicaux méthyle,
- R' représente un radical alkylène, linéaire ou ramifié, ayant 2 à 6 atomes de carbone,
- p représente un nombre moyen de 1 à 30,
- q représente un nombre moyen de 1 à 100.

15. Procédé selon la revendication 14, caractérisé en ce que l'on ajoute audit polymère une huile de formule (II) dans laquelle :
- R représente un radical méthyle ;
- R' représente un radical triméthylène ou méthyl-2 triméthylène ;
- p représente un nombre moyen de 2 à 20 ;
- q représente un nombre moyen de 2 à 30.

16. Procédé selon l'une des revendications 1 à 15, caractérisé en ce que l'on ajoute audit polymère de 0% à 5% en poids d'huile polyorganosiloxanique γ-hydroxyalkylée par rapport au poids du polymère chloré et de préférence de 0,01% à 2% en poids.

## Patentansprüche (Patentansprüche für folgende(n) Vertragsstaat(en): AT, BE, CH, LI, DE, DK, FR, GB, GR, IT, LU, NL, PT, SE)

1. Stabilisierte Zusammensetzungen auf der Grundlage von chlorhaltigen Polymeren, dadurch gekennzeichnet, daß sie enthalten:
a) 0,005 bis 1 Gew.-%, bezogen auf das Gewicht des chlorhaltigen Polymers, einer organischen Zink- oder Cadmiumverbindung,
b) 0,005 bis 5 Gew.-%, bezogen auf das Gewicht des chlorhaltigen Polymers, einer organischen Calcium-, Magnesium-, Barium- oder Lanthanidenverbindung,
c) 0,005 bis 5 Gew.-%, bezogen auf das Gewicht des chlorhaltigen Polymers, mindestens eines amorphen basischen Aluminium- und Magnesiumcarbonats, allgemein wiedergegeben durch die Formel (I):
(MgO)_{y}, Al₂O₃, (CO₂)ₓ, (H₂O)_{z} (I)
worin:
- y in Mole eine ganze Zahl oder Bruchzahl ist, wobei 0 < y ≤ 1,7
- x in Mole eine ganze Zahl oder Bruchzahl ist, wobei 0 < y ≤ 0,7
- z in Mole eine ganze Zahl oder gebrochene Zahl größer als oder gleich 3 ist,
und darüberhinaus 1/4 des Aluminiums in nicht-amorpher Form vorliegt.

2. Zusammensetzungen nach Anspruch 1, dadurch gekennzeichnet, daß das chlorhaltige Polymer ausgewählt ist aus Polyvinylchlorid, Polyvinylidenchlorid; Copolymeren, die einen überwiegenden Anteil an Vinylchlorideinheiten aufweisen, die aus Vinylchlorid und anderen Monomeren erhalten wurden; Polymer- oder Copolymermischungen, deren größter Teil aus Vinylchlorid gewonnen wurde.

3. Zusammensetzungen nach einem der Ansprüche 1 oder 2, dadurch gekennzeichnet, daß die organische Zink- oder Cadmiumverbindung ausgewählt wird aus Carboxylaten und Phenolaten des Zinks oder Cadmiums.

4. Zusammensetzungen nach einem der Ansprüche 1 bis 3, dadurch gekennzeichnet, daß die organische Calcium-, Magnesium-, Barium- und Lanthanidenverbindung ausgewählt ist aus den Carboxylaten und den Phenolaten dieser Metalle.

5. Zusammensetzungen nach einem der Ansprüche 1 bis 4, dadurch gekennzeichnet, daß sie 0,01 bis 2 Gew.-%, bezogen auf das Gewicht des chlorhaltigen Polymers, basisches amorphes Aluminium- und Magnesiumcarbonat der Formel (I) enthalten.

6. Zusammensetzungen nach einem der Ansprüche 1 bis 5, dadurch gekennzeichnet, daß:
- die organische Zink- oder Cadmiumverbindung 0,01 bis 0,6 Gew.-%, bezogen auf das chlorhaltige Polymer, ausmacht,
- die organische Calcium-, Magnesium-, Barium- und Lanthanidenverbindung 0,02 bis 2 Gew.-%, bezogen auf das Gewicht des chlorhaltigen Polymers, ausmacht.

7. Zusammensetzungen nach einem der Ansprüche 1 bis 6, dadurch gekennzeichnet, daß sie mindestens einen sekundären organischen Stabilisator enthalten.

8. Zusammensetzungen nach einem der Ansprüche 1 bis 7, dadurch gekennzeichnet, daß der organische Stabilisator ein β-Diketon, ein β-Ketoaldehyd und/oder ein Dihydro-1,4-dimethyl-2,6-dicarboxylat-3,5-pyridin ist.

9. Zusammensetzungen nach Anspruch 8, dadurch gekennzeichnet, daß das β-Diketon ausgewählt ist aus Benzoylstearoylmethan, Dibenzoylmethan, Benzoylaceton, Benzoyl-methyl-3-butanoylmethan, Methoxycarbonylbenzoylbenzoylmethan, Bis-β-diketone wie Bis-acetylaceto-1,4-butan, Bis-benzoylaceto-1,8-octan, Bis-acetylaceto-1,4-benzen.

10. Zusammensetzungen nach einem der Ansprüche 8 oder 9, dadurch gekennzeichnet, daß das β-Diketon oder das β-Ketoaldehyd 0,005 bis 5 Gew.-%, bezogen auf das Gewicht des chlorhaltigen Polymers, und vorzugsweise 0,01 bis 2 Gew.-% ausmacht.

11. Zusammensetzungen nach Anspruch 8, dadurch gekennzeichnet, daß das Dihydro-1,4-dimethyl-2,6-dicarboxylat-3,5-pyridin 0,01 bis 5 Gew.-%, bezogen auf das Gewicht des chlorhaltigen Polymers, und vorzugsweise 0,05 bis 2 Gew.-% ausmacht.

12. Zusammensetzungen nach Anspruch 7, dadurch gekennzeichnet, daß der sekundäre organische Stabilisator ausgewählt ist aus:
- β-Ketoester und ganz besonders Ester der Ketoessigsäuren,
- Phenyl-2-indol und dessen Derivate,
- Ester der β-Aminocrotonsäuren, insbesondere die β-Aminocrotonate mit einer langen Alkylkette von C₁₂ bis C₂₀ und die β-Aminocrotonate des Thioalkylenglykols,
- Harnstoff und dessen Derivate wie Phenylharnstoff, Thioharnstoff und dessen Derivate wie Diphenylthioharnstoff,
- Diester der Mercaptocarbonsäuren und insbesondere:
. die Ester der Thioglykolsäure,
. die Ester der Thioapfelsäure,
. die Ester der Mercapto-2-propionsäure.

13. Zusammensetzungen nach Anspruch 12, dadurch gekennzeichnet, daß die organischen Stabilisatoren 0,01 bis 5 Gew.-%, bezogen auf das Gewicht des chlorhaltigen Polymers, und vorzugsweise 0,05 bis 2 Gew.-% ausmachen.

14. Zusammensetzungen nach einem der Ansprüche 1 bis 13, dadurch gekennzeichnet, daß sie ein γ-hydroxy-alkyliertes Polyorganosiloxanöl der allgemeinen Formel (II) 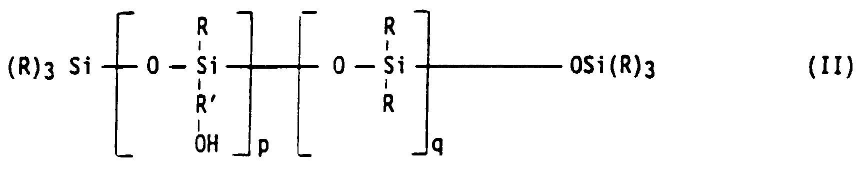 enthalten, worin:
- die Reste R identisch oder verschieden, einen Methyl- oder Phenylrest darstellen, wobei mindestens 60 Mol-% der Reste R Methylreste sind,
- R' einen geradkettigen oder verzweigtkettigen Alkylenrest mit 2 bis 6 Kohlenstoffatomen darstellt,
- p ist eine Durchschnittszahl von 1 bis 30,
- q ist eine Durchschnittszahl von 1 bis 100.

15. Zusammensetzungen nach Anspruch 14, dadurch gekennzeichnet, daß sie ein Öl der Formel (II) enthalten, worin:
- R einen Methylrest darstellt;
- R' einen Trimethylen oder Methyl-2-trimethylen-Rest darstellt;
- p ist eine Durchschnittszahl von 2 bis 20;
- q ist eine Durchschnittszahl von 2 bis 30.

16. Zusammensetzungen nach einem der Ansprüche 1 bis 15, dadurch gekennzeichnet, daß sie 0 bis 5 Gew.-% des γ-hydroxy-alkylierten Polyorganosiloxanöls, bezogen auf das Gewicht des chlorhaltigen Polymers, enthalten, vorzugsweise 0,01 bis 2 Gew.-%.

## Patentansprüche (Patentansprüche für folgende(n) Vertragsstaat(en): ES)

1. Verfahren zur Stabilisierung eines chlorhaltigen Polymers, dadurch gekennzeichnet, daß man dem Polymer hinzugibt:
a) 0,005 bis 1 Gew.-%, bezogen auf das Gewicht des chlorhaltigen Polymers, einer organischen Zink- oder Cadmiumverbindung,
b) 0,005 bis 5 Gew.-%, bezogen auf das Gewicht des chlorhaltigen Polymers, einer organischen Calcium-, Magnesium-, Barium- oder Lanthanidenverbindung,
c) 0,005 bis 5 Gew.-%, bezogen auf das Gewicht des chlorhaltigen Polymers, mindestens eines amorphen basischen Aluminium- und Magnesiumcarbonats, allgemein wiedergegeben durch die Formel (I):
(MgO)_{y}, Al₂O₃, (CO₂)ₓ, (H₂O)_{z} (I)
worin:
- y in Mole eine ganze Zahl oder Bruchzahl ist, wobei 0 < y ≤ 1,7
- x in Mole eine ganze Zahl oder Bruchzahl ist, wobei 0 < y ≤ 0,7
- z in Mole eine ganze Zahl oder gebrochene Zahl größer als oder gleich 3 ist,
und darüberhinaus 1/4 des Aluminiums in nicht-amorpher Form vorliegt.

2. Verfahren nach Anspruch 1, dadurch gekennzeichnet, daß das chlorhaltige Polymer ausgewählt ist aus Polyvinylchlorid, Polyvinylidenchlorid; Copolymeren, die einen überwiegenden Anteil an Vinylchlorideinheiten aufweisen, die aus Vinylchlorid und anderen Monomeren erhalten wurden; Polymer- oder Copolymermischungen, deren größter Teil aus Vinylchlorid gewonnen wurde.

3. Verfahren nach einem der Ansprüche 1 oder 2, dadurch gekennzeichnet, daß die organische Zink- oder Cadmiumverbindung ausgewählt wird aus Carboxylaten und Phenolaten des Zinks oder Cadmiums.

4. Verfahren nach einem der Ansprüche 1 bis 3, dadurch gekennzeichnet, daß die organische Calcium-, Magnesium-, Barium- und Lanthanidenverbindung ausgewählt ist aus den Carboxylaten und den Phenolaten dieser Metalle.

5. Verfahren nach einem der Ansprüche 1 bis 4, dadurch gekennzeichnet, daß man dem Polymer 0,01 bis 2 Gew.-%, bezogen auf das Gewicht des chlorhaltigen Polymers, basisches amorphes Aluminium- und Magnesiumcarbonat der Formel (I) zugibt.

6. Verfahren nach einem der Ansprüche 1 bis 5, dadurch gekennzeichnet, daß:
- die organische Zink- oder Cadmiumverbindung 0,01 bis 0,6 Gew.-%, bezogen auf das chlorhaltige Polymer, ausmacht,
- die organische Calcium-, Magnesium-, Barium- und Lanthanidenverbindung 0,02 bis 2 Gew.-%, bezogen auf das Gewicht des chlorhaltigen Polymers, ausmacht.

7. Verfahren nach einem der Ansprüche 1 bis 6, dadurch gekennzeichnet, daß man dem Polymer mindestens einen sekundären organischen Stabilisator zugibt.

8. Verfahren nach einem der Ansprüche 1 bis 7, dadurch gekennzeichnet, daß der organische Stabilisator ein β-Diketon, ein β-Ketoaldehyd und/oder ein Dihydro-1,4-dimethyl-2,6-dicarboxylat-3,5-pyridin ist.

9. Verfahren nach Anspruch 8, dadurch gekennzeichnet, daß das β-Diketon ausgewählt ist aus Benzoylstearoylmethan, Dibenzoylmethan, Benzoylaceton, Benzoyl-methyl-3-butanoylmethan, Methoxycarbonylbenzoylbenzoylmethan, Bis-β-diketone wie Bisacetylaceto-1,4-butan, Bis-benzoylaceto-1,8-octan, Bis-acetylaceto-1,4-benzen.

10. Verfahren nach einem der Ansprüche 8 oder 9, dadurch gekennzeichnet, daß das β-Diketon oder das β-Ketoaldehyd 0,005 bis 5 Gew.-%, bezogen auf das Gewicht des chlorhaltigen Polymers, und vorzugsweise 0,01 bis 2 Gew.-% ausmacht.

11. Verfahren nach Anspruch 8, dadurch gekennzeichnet, daß das Dihydro-1,4-dimethyl-2,6-dicarboxylat-3,5-pyridin 0,01 bis 5 Gew.-%, bezogen auf das Gewicht des chlorhaltigen Polymers, und vorzugsweise 0,05 bis 2 Gew.-% ausmacht.

12. Verfahren nach Anspruch 7, dadurch gekennzeichnet, daß der sekundäre organische Stabilisator ausgewählt ist aus:
- β-Ketoester und ganz besonders Ester der Ketoessigsäuren,
- Phenyl-2-indol und dessen Derivate,
- Ester der β-Aminocrotonsäuren, insbesondere die β-Aminocrotonate mit einer langen Alkylkette von C₁₂ bis C₂₀ und die β-Aminocrotonate des Thioalkylenglykols,
- Harnstoff und dessen Derivate wie Phenylharnstoff, Thioharnstoff und dessen Derivate wie Diphenylthioharnstoff,
- Diester der Mercaptocarbonsäuren und insbesondere:
. die Ester der Thioglykolsäure,
. die Ester der Thioapfelsäure,
. die Ester der Mercapto-2-propionsäure.

13. Verfahren nach Anspruch 12, dadurch gekennzeichnet, daß die organischen Stabilisatoren 0,01 bis 5 Gew.-%, bezogen auf das Gewicht des chlorhaltigen Polymers, und vorzugsweise 0,05 bis 2 Gew.-% ausmachen.

14. Verfahren nach einem der Ansprüche 1 bis 13, dadurch gekennzeichnet, daß man dem Polymer eine wirksame Menge eines γ-hydroxy-alkyliertes Polyorganosiloxanöls der allgemeinen Formel (II) zugibt 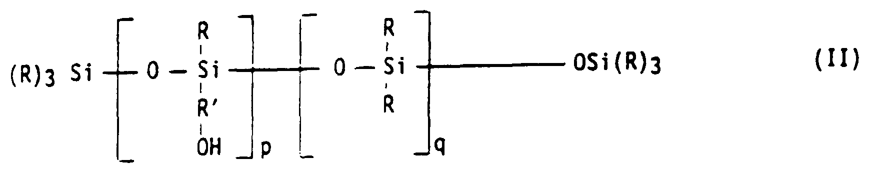 worin:
- der Rest R identisch oder verschieden Methyl -oder Phenylreste darstellent, wobei mindestens 60-Mol-% der Reste R Methylreste sind,
- R' stellt einen geradkettigen oder verzweigtkettigen Alkylenrest mit 2 bis 6 Kohlenstoffatomen dar,
- p ist eine Durchschnittszahl von 1 bis 30,
- q ist eine Durchschnittszahl von 1 bis 100.

15. Verfahren nach Anspruch 14, dadurch gekennzeichnet, daß man dem Polymer ein Öl der Formel (II) zugibt, worin:
- R einen Methylrest darstellt;
- R' einen Trimethylen oder Methyl-2-trimethylen-Rest darstellt;
- p ist eine Durchschnittszahl von 2 bis 20;
- q ist eine Durchschnittszahl von 2 bis 30.

16. Verfahren nach einem der Ansprüche 1 bis 15, dadurch gekennzeichnet, daß man dem Polymer 0 bis 5 Gew.-% eines γ-hydroxy-alkylierten Polyorganosiloxanöls, bezogen auf das Gewicht des chlorhaltigen Polymers, zugibt, vorzugsweise 0,01 bis 2 Gew.-%.

## Claims (Claims for the following Contracting State(s): AT, BE, CH, LI, DE, DK, FR, GB, GR, IT, LU, NL, PT, SE)

1. Stabilized compositions based on chlorinated polymer, which are characterized in that they contain:
a) 0.005 to 1 % by weight, relative to the weight of chlorinated polymer, of an organic zinc or cadmium compound,
b) 0.005 to 5 % by weight, relative to the weight of chlorinated polymer, of an organic calcium, magnesium, barium or lanthanide compound,
c) 0.005 to 5 % by weight, relative to the weight of chlorinated polymer, of at least one amorphous basic aluminium magnesium carbonate, denoted overall by the formula (I) :
(MgO)_{y}.Al₂O₃.(CO₂)ₓ.(H₂O)_{z} (I)
in which:
- y denotes, in moles, a whole or fractional number such that 0 < y ≤ 1.7
- x denotes, in moles, a whole or fractional number such that 0 < x ≤ 0.7
- z denotes, in moles, a whole or fractional number greater than or equal to 3,
and in which at most 1/4 of the aluminium is in nonamorphous form.

2. Compositions according to claim 1, characterized in that the chlorinated polymer is chosen from polyvinyl chloride, polyvinylidene chloride, copolymers containing predominantly vinyl chloride units obtained from vinyl chloride and other monomers, and mixtures of polymers or copolymers in which a predominant part is obtained from vinyl chloride.

3. Compositions according to either of claims 1 and 2, characterized in that the organic zinc or cadmium compound is chosen from zinc or cadmium carboxylates and phenolates.

4. Compositions according to one of claims 1 to 3, characterized in that the organic calcium, magnesium, barium and lanthanide compound is chosen from the carboxylates and the phenolates of these metals.

5. Compositions according to one of claims 1 to 4, characterized in that they contain from 0.01 % to 2 % by weight of amorphous basic aluminium magnesium carbonate of formula (I) relative to the weight of chlorinated polymer.

6. Compositions according to one of claims 1 to 5, characterized in that:
- the organic zinc or cadmium compound represents from 0.01 % to 0.6 % by weight relative to the chlorinated polymer;
- the organic calcium, magnesium, barium and lanthanide compound represents from 0.02 % to 2 % by weight relative to the weight of the chlorinated polymer.

7. Compositions according to one of claims 1 to 6, characterized in that they contain at least one secondary organic stabilizer.

8. Compositions according to one of claims 1 to 7, characterized in that the organic stabilizer is a β-diketone, a β-ketoaldehyde and/or a 1,4-dihydro-2,6-dimethyl-3,5-pyridinedicarboxylate.

9. Compositions according to claim 8, characterized in that the β-diketone is chosen from benzoylstearoylmethane, dibenzoylmethane, benzoylacetone, benzoyl-3-methylbutanoylmethane, methoxycarbonylbenzoylbenzoylmethanes, bis-β-diketones such as 1,4-bis(acetylaceto)-butane, 1,8-bis(benzoylaceto)octane or 1,4-bis(acetylaceto)benzene.

10. Compositions according to either of claims 8 and 9, characterized in that the β-diketone or the β-ketoaldehyde represents from 0.005 % to 5 % by weight relative to the weight of the chlorinated polymer, and preferably from 0.01 % to 2 % by weight per weight.

11. Compositions according to claim 8, characterized in that the 1,4-dihydro-2,6-dimethyl-3,5-pyridinedicarboxylate represents from 0.01% % to 5 % by weight relative to the weight of the chlorinated polymer, and preferably from 0.05 **%** to 2 % by weight per weight.

12. Compositions according to claim 7, characterized in that the secondary organic stabilizer is chosen from:
- beta-ketoesters and more particularly the esters of ketoacetic acids,
- 2-phenylindole and its derivatives,
- beta-aminocrotonic esters, more particularly C₁₂-C₂₀ long-chain alkyl beta-aminocrotonates and thioalkyleneglycol beta-aminocrotonates;
- urea and its derivatives such as phenylurea, thiourea and its derivatives such as diphenylthiourea;
- esters of mercaptocarboxylic acids and more particularly;
- esters of thioglycolic acid,
- diesters of thiomalic acid,
- esters of 2-mercaptopropionic acid.

13. Compositions according to claim 12, characterized in that the organic stabilizers represent from 0.01 % to 5 % by weight relative to the weight of the chlorinated polymer, and preferably from 0.05 % to 2 % by weight per weight.

14. Compositions according to one of claims 1 to 13, characterized in that they contain an effective quantity of a γ-hydroxyalkylated polyorgano-siloxane oil of general formula (II) 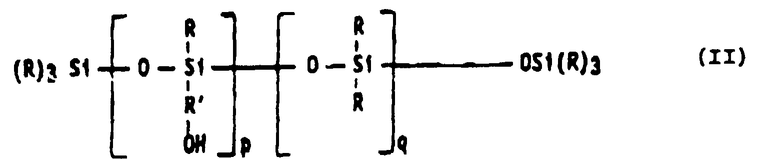 in which:
- the radicals R, which are identical or different, denote a methyl or phenyl radical, at least 60 mol% of radicals R being methyl radicals,
- R' denotes a linear or branched alkylene radical containing 2 to 6 carbon atoms,
- p denotes an average number from 1 to 30,
- q denotes an average number from 1 to 100.

15. Compositions according to claim 14, characterized in that they contain an oil of formula (II) in which:
- R denotes a methyl radical;
- R' denotes a trimethylene or 2-methyltrimethylene radical;
- p denotes an average number from 2 to 20;
- q denotes an average number from 2 to 30.

16. Compositions according to one of claims 1 to 15, characterized in that they contain from 0 % to 5 % by weight of γ-hydroxyalkylated polyorganosiloxane oil relative to the weight of the chlorinated polymer, and preferably from 0.01 % to 2 % by weight.

## Claims (Claims for the following Contracting State(s): ES)

1. Process for stabilizing chlorinated polymer, characterized in that the following are added to the said polymer:
a) 0.005 to 1 % by weight, relative to the weight of chlorinated polymer, of an organic zinc or cadmium compound,
b) 0.005 to 5 % by weight, relative to the weight of chlorinated polymer, of an organic calcium, magnesium, barium or lanthanide compound,
c) 0.005 to 5 % by weight, relative to the weight of chlorinated polymer, of at least one amorphous basic aluminium magnesium carbonate, denoted overall by the formula (I):
(MgO)_{y}.Al₂O₃.(CO₂)ₓ.(H₂O)_{z} (I)
in which:
- y denotes, in moles, a whole or fractional number such that 0 < y s 1.7
- x denotes, in moles, a whole or fractional number such that 0 < x ≤ 0.7
- z denotes, in moles, a whole or fractional number greater than or equal to 3,
and in which at most 1/4 of the aluminium is in nonamorphous form.

2. Process according to claim 1, characterized in that the chlorinated polymer is chosen from polyvinyl chloride, polyvinylidene chloride, copolymers containing predominantly vinyl chloride units obtained from vinyl chloride and other monomers, and mixtures of polymers or copolymers in which a predominant part is obtained from vinyl chloride.

3. Process according to either of claims 1 and 2, characterized in that the organic zinc or cadmium compound is chosen from zinc or cadmium carboxylates and phenolates.

4. Process according to one of claims 1 to 3, characterized in that the organic calcium, magnesium, barium and lanthanide compound is chosen from the carboxylates and the phenolates of these metals.

5. Process according to one of claims 1 to 4, characterized in that from 0.01 % to 2 % by weight of amorphous basic aluminium magnesium carbonate of formula (I) relative to the weight of chlorinated polymer is added to the said polymer.

6. Process according to one of claims 1 to 5, characterized in that:
- the organic zinc or cadmium compound represents from 0.01 % to 0.6 % by weight relative to the chlorinated polymer;
- the organic calcium, magnesium, barium and lanthanide compound represents from 0.02 % to 2 % by weight relative to the weight of the chlorinated polymer.

7. Process according to one of claims 1 to 6, characterized in that at least one secondary organic stabilizer is added to the said polymer.

8. Process according to one of claims 1 to 7, characterized in that the organic stabilizer is a β-diketone, a β-ketoaldehyde and/or a 1,4-dihydro-2,6-dimethyl-3,5-pyridinedicarboxylate.

9. Process according to claim 8, characterized in that the β-diketone is chosen from benzoylstearoylmethane, dibenzoylmethane, benzoylacetone, benzoyl-3-methylbutanoylmethane, methoxycarbonylbenzoylbenzoylmethanes, bis-β-diketones such as 1,4-bis(acetylaceto)-butane, 1,8-bis(benzoylaceto)octane or 1,4-bis(acetylaceto)benzene.

10. Process according to either of claims 8 and 9, characterized in that the β-diketone or the β-ketoaldehyde represents from 0.005 % to 5 % by weight relative to the weight of the chlorinated polymer, and preferably from 0.01 % to 2 % by weight per weight.

11. Process according to claim 8, characterized in that the 1,4-dihydro-2,6-dimethyl-3,5-pyridinedicarboxylate represents from 0.01 % to 5 % by weight relative to the weight of the chlorinated polymer, and preferably from 0.05 % to 2 % by weight per weight.

12. Process according to claim 7, characterized in that the secondary organic stabilizer is chosen from:
- beta-keto esters and more particularly the esters of ketoacetic acids,
- 2-phenylindole and its derivatives,
- beta-aminocrotonic esters, more particularly C₁₂-C₂₀ long-chain alkyl beta-aminocrotonates and thioalkyleneglycol beta-aminocrotonates;
- urea and its derivatives such as phenylurea, thiourea and its derivatives such as diphenylthiourea;
- esters of mercaptocarboxylic acids and more particularly:
- esters of thioglycolic acid,
- diesters of thiomalic acid,
- esters of 2-mercaptopropionic acid.

13. Process according to claim 12, characterized in that the organic stabilizers represent from 0.01 % to 5 % by weight relative to the weight of the chlorinated polymer, and preferably from 0.05 % to 2 % by weight per weight.

14. Process according to one of claims 1 to 13, characterized in that an effective quantity of a γ-hydroxyalkylated polyorganosiloxane oil of general formula (II) 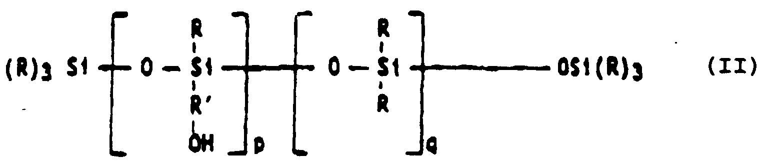 in which:
- the radicals R, which are identical or different, denote a methyl or phenyl radical, at least 60 mol% of radicals R being methyl radicals,
- R' denotes a linear or branched alkylene radical containing 2 to 6 carbon atoms,
- p denotes an average number from 1 to 30,
- q denotes an average number from 1 to 100 is added to the said polymer.

15. Process according to claim 14, characterized in that an oil of formula (II) in which:
- R denotes a methyl radical;
- R' denotes a trimethylene or 2-methyltrimethylene radical;
- p denotes an average number from 2 to 20;
- q denotes an average number from 2 to 30 is added to the said polymer.

16. Process according to one of claims 1 to 15, characterized in that from 0 % to 5 % by weight of γ-hydroxyalkylated polyorganosiloxane oil relative to the weight of the chlorinated polymer, and preferably from 0.01 % to 2 % by weight, is added to the said polymer.
